# EUROPÄISCHE PATENTANMELDUNG

(11) **EP 4 686 991 A1**
(43) Veröffentlichungstag der Anmeldung: **04.02.2026**
(21) Anmeldenummer: 24192087.5
(22) Anmeldetag: 31.07.2024
(51) Int. Cl.: G05B 19/416, B23Q 1/01

(54) **WERKZEUGMASCHINENSYSTEM SOWIE VERFAHREN ZUM BETRIEB EINES WERKZEUGMASCHINENSYSTEMS**

(71) Anmelder: Siemens Aktiengesellschaft, 80333 München (DE)
(72) Erfinder: Alkafafi, Loay, 91052 Erlangen (DE); Rack, Philip Joachim, 70197 Stuttgart, S-West (DE); Spielmann, Ralf, 70569 Stuttgart (DE)
(74) Vertreter: Siemens Patent Attorneys

(57) **Zusammenfassung**

Bei einem Werkzeugmaschinensystem (1) mit einer Werkzeugmaschine (2), umfassend:
- eine ortsfeste Maschinenbasis (6);
- zwei parallel in einer dritten Raumrichtung (Z) ausgerichtete, mit der Maschinenbasis (6) verbundene Tragelemente (7, 8),
- ein mit den beiden parallelen Tragelementen (7, 8) verbundener, in einer zweiten Raumrichtung (Y) ausgerichteter Querträger (9);
- ein an dem Querträger (9) befestigter, mittels zweiter Antriebsmittel entlang einer zweiten Maschinenachse (Y1) in der zweiten Raumrichtung (Y) entlang des Querträgers (9) verstellbarer Werkzeughaltekopf (10);
- wobei der Querträger (9) mittels dritter Antriebsmittel entlang zweier paralleler dritter Maschinenachsen (Z1, Z2) in der dritten Raumrichtung (Z) bezüglich der Tragelemente (7, 8) verstellbar ist und/oder
- die beiden Tragelemente (7, 8) mittels erster Antriebsmittel entlang zweier paralleler erster Maschinenachsen (X1, X2) in einer ersten Raumrichtung (X) bezüglich der Maschinenbasis (6) verstellbar sind;
und eine mit der Werkzeugmaschine (2) verbundene Steuereinrichtung (3) zur Steuerung der ersten, zweiten und/oder dritten Antriebsmittel, soll die Bearbeitungszeit für die Be- und/oder Verarbeitung des Werkstücks verkürzt werden.

Hierzu sieht die Erfindung vor, dass wenigstens eine kinematischen Kenngröße der ersten (X1, X2) und/oder dritten Maschinenachsen (Z1, Z2) in Abhängigkeit einer Position des Werkzeughaltekopfes (10) bezüglich der zweiten Maschinenachse (Y1) vorgebbar ist. Die kinematische Kenngröße, insbesondere die maximale Geschwindigkeit und/oder die maximale Beschleunigung und/oder der maximale Ruck der betreffenden Maschinenachsen ist damit an eine durch die Bewegung des Werkzeughaltekopfes (10) hervorgerufene unsymmetrisch Lastverteilung anpassbar.

## Beschreibung

Die Erfindung betrifft ein Werkzeugmaschinensystem mit einer Werkzeugmaschine, umfassend:
- eine ortsfeste Maschinenbasis;
- zwei parallel in einer dritten Raumrichtung ausgerichtete, mit der Maschinenbasis verbundene Tragelemente;
- ein mit den beiden parallelen Tragelementen verbundener, in einer zweiten Raumrichtung ausgerichteter Querträger;
- ein an dem Querträger befestigter, mittels zweiter Antriebsmittel entlang einer zweiten Maschinenachse in der zweiten Raumrichtung entlang des Querträgers verstellbarer Werkzeughaltekopf;
- wobei der Querträger mittels dritter Antriebsmittel entlang zweier paralleler dritter Maschinenachsen in der dritten Raumrichtung bezüglich der Tragelemente verstellbar ist und/oder
- die beiden Tragelemente mittels erster Antriebsmittel entlang zweier paralleler erster Maschinenachsen in einer ersten Raumrichtung bezüglich der Maschinenbasis verstellbar sind;
und eine mit der Werkzeugmaschine verbundene Steuereinrichtung zur Steuerung der ersten, zweiten und/oder dritten Antriebsmittel.

Ferner betrifft die Erfindung ein Verfahren zum Betrieb eines derartigen Werkzeugmaschinensystems.

Weiterhin betrifft die Erfindung eine Steuereinrichtung, insbesondere numerische (CNC-) Steuerung, für ein derartiges Werkzeugmaschinensystem.

Aus der DE212019000284U1 ist eine Portalfräsmaschine bekannt, die mit Folgendem versehen ist:
- einem Paar Ständer, die in einer Querrichtung voneinander beabstandet sind, wobei jeder Ständer eine vorherrschende Erstreckung entlang einer jeweiligen Vertikalrichtung aufweist; und
- einem Querträger, der sich, gestützt von den Ständern, entlang der Querrichtung erstreckt, wobei der Querträger dazu ausgeführt ist, einem Werkzeughalterkopf verschiebbar zu stützen;
- Vertikalbewegungsmittel, die mit dem Querträger in Eingriff stehen, um dessen translatorische Bewegung entlang der Vertikalrichtung anzutreiben;
- wobei, für jeden Ständer, die Vertikalbewegungsmittel eine Spindel umfassen, die von dem Ständer gestützt wird und sich entlang einer vertikalen Spindelachse parallel zu der Vertikalrichtung zwischen einem oberen Ende und einem unteren Ende erstreckt und mit dem Querträger in Wirkeingriff steht; und
- wobei, für jeden Ständer, die Vertikalbewegungsmittel einen oberen Elektromotor, der direkt oder indirekt mit der Spindel in Eingriff steht, am oberen Ende und einen unteren Elektromotor, der direkt oder indirekt mit der Spindel in Eingriff steht, am unteren Ende umfassen.

Bei Portalmaschinen werden verschiedene Maschinenelemente, wie z.B. die Ständer oder der Querträger, jeweils von mehreren parallel bzw. synchron arbeitenden Maschinenachsen, nachfolgend auch kurz als "Achsen" bezeichnet, bewegt. Die Achsen, die gemeinsam ein Maschinenteil bewegen, werden auch als Gantry-Achsen. bzw. Gantry-Verbund bezeichnet. Aufgrund des mechanischen Aufbaus sind die Gantry-Achsen starr miteinander verbunden und müssen demzufolge von der Steuerung immer synchron verfahren werden.

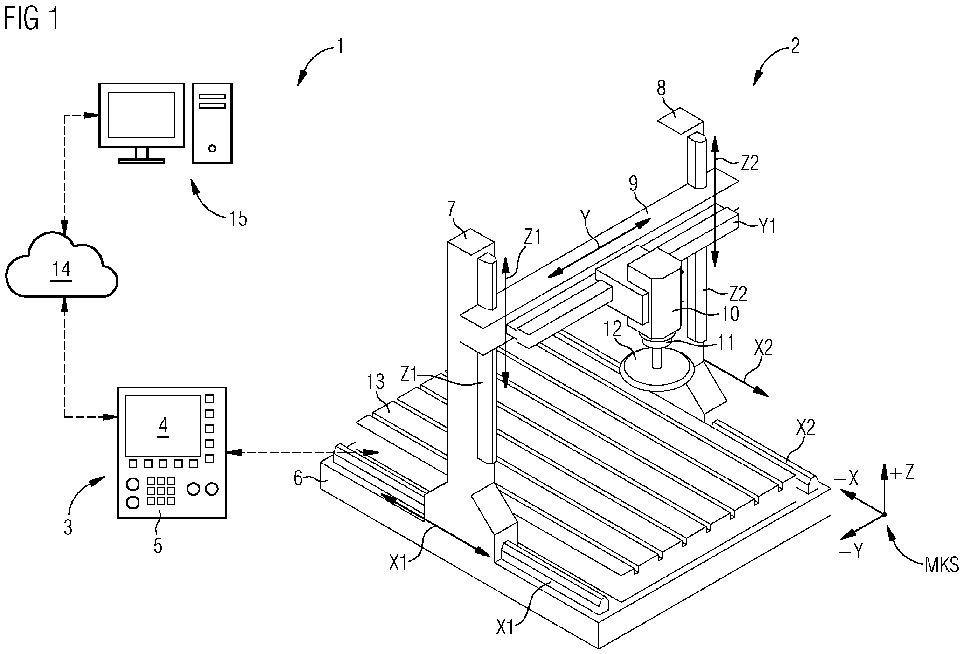

Beim Bewegen der parallel arbeitenden Achsen ist die Lastverteilung meist nicht symmetrisch zwischen den zwei oder mehreren Gantry-Achsen, bzw. im Gantry-Verbund. Beispielsweise ist bei der aus FIG 1 ersichtlichen Portalmaschine die Lastverteilung in den (Maschinen-) Achsen Z1 und Z2, die den Querträger mit der Y-Achse tragen, nur dann identisch (ohne mechanische Effekte wie Reibung etc.), wenn die Y-Achse bzw. deren Schwerpunkt bzw. der an der Y-Achse verstellbar befestigte Werkzeughaltekopf genau mittig zwischen der Z1- und der Z2- Achse steht. Wenn hingegen die Y-Achse vollständig zu einer Seite, z.B. zur Z1-Achse, bewegt ist, ist die Lastverteilung im Gantry-Verbund maximal unsymmetrisch.

Die Position der Y-Achse beeinfluss nicht nur die Lastverteilung in den Achsen Z1 und Z2, sondern auch die Dynamikverteilung bzw. die Dynamikreserve der Achse Z1 und Z2 (hier ist nicht die Regelung gemeint, also nicht KV, KP oder TN). Nur wenn die Y-Achse genau mittig zwischen der Z1- und der Z2- Achse steht, ist der in den jeweiligen Antrieben der Z1- oder Z2-Achse notwendige Strom, um die Achsen Z1 und Z2 synchron gegen die Schwerkraft nach oben zu bewegen, identisch (abgesehen von mechanischen Effekten wie Reibung etc.). Insbesondere wenn die Y-Achse vollständig zu einer Seite, z.B. zur Z1-Achse, bewegt ist, ist der notwendige Strom in den Antrieben der Achsen Z1 und Z2 maximal unsymmetrisch.

Ähnliches gilt für die Lastverteilung in den beiden X-Achsen X1 und X2 der Portalmaschine. Auch hier wirkt sich die Lastverteilung und insbesondere die Position des Werkzeughaltekopfes und dessen Trägheit auf die notwendigen Antriebsströme der Achsen X1 und X2 aus, um eine gewünschte Beschleunigung oder einen gewünschten Ruck zu erreichen.

Die Parametrierung der Dynamik eines Gantry-Verbunds wird heute immer auf den maximal unsymmetrischen Fall ausgelegt. So wird beispielsweise die seitens der Steuereinrichtung vorgebbare, maximale Beschleunigung des Gantry-Verbunds gemäß FIG 1 für den Querträger so eingestellt, dass der maximal zulässige Strom in den Antrieben der Z1- und der Z2- Achse noch ausreichend ist, um den Querträger mit der vorgegebenen, maximalen Beschleunigung zu beschleunigen, selbst wenn die Y-Achse und damit der Werkzeughaltekopf vollständig zu einer Seite hin ausgelenkt (verfahren) ist.

Nachteilig bei der bekannten Vorgehensweise ist, dass Portalmaschinen häufig nicht mit einer maximal möglichen Beschleunigung von Maschinenachsen betrieben werden, was die zur Bearbeitung eines Werkstücks mit einer derartigen Portalmaschine benötigte Arbeitszeit unnötig verlängert.

Aufgabe der vorliegenden Erfindung ist es daher, die bei einer Werkzeugmaschine, insbesondere einer Portalmaschine, zur Bearbeitung eines Werkstücks benötigte Arbeitszeit zu verkürzen.

Diese Aufgabe wird gelöst durch ein Werkzeugmaschinensystem mit einer Werkzeugmaschine, umfassend:
- eine ortsfeste Maschinenbasis;
- zwei parallel in einer dritten Raumrichtung ausgerichtete, mit der Maschinenbasis verbundene Tragelemente;
- ein mit den beiden parallelen Tragelementen verbundener, in einer zweiten Raumrichtung ausgerichteter Querträger;
- ein an dem Querträger befestigter, mittels zweiter Antriebsmittel entlang einer zweiten Maschinenachse in der zweiten Raumrichtung entlang des Querträgers verstellbarer Werkzeughaltekopf;
- wobei der Querträger mittels dritter Antriebsmittel entlang zweier paralleler dritter Maschinenachsen in der dritten Raumrichtung bezüglich der Tragelemente verstellbar ist und/oder
- die beiden Tragelemente mittels erster Antriebsmittel entlang zweier paralleler erster Maschinenachsen in einer ersten Raumrichtung bezüglich der Maschinenbasis verstellbar sind;
und eine mit der Werkzeugmaschine verbundene Steuereinrichtung zur Steuerung der ersten, zweiten und/oder dritten Antriebsmittel, wobei wenigstens eine kinematischen Kenngröße der ersten und/oder dritten Maschinenachsen in Abhängigkeit einer Position des Werkzeughaltekopfes bezüglich der zweiten Maschinenachse vorgebbar ist.

Ferner wird die Aufgabe gelöst durch ein Verfahren zum Betrieb eines Werkzeugmaschinensystems mit einer Werkzeugmaschine, umfassend:
- eine ortsfeste Maschinenbasis;
- zwei parallel in einer dritten Raumrichtung ausgerichtete, mit der Maschinenbasis verbundene Tragelemente;
- ein mit den beiden parallelen Tragelementen verbundener, in einer zweiten Raumrichtung ausgerichteter Querträger;
- ein an dem Querträger befestigter, mittels zweiter Antriebsmittel entlang einer zweiten Maschinenachse in der zweiten Raumrichtung entlang des Querträgers verstellbarer Werkzeughaltekopf;
- wobei der Querträger mittels dritter Antriebsmittel entlang zweier paralleler dritter Maschinenachsen in der dritten Raumrichtung bezüglich der Tragelemente verstellbar ist und/oder
- die beiden Tragelemente mittels erster Antriebsmittel entlang zweier paralleler erster Maschinenachsen in einer ersten Raumrichtung bezüglich der Maschinenbasis verstellbar sind;
und eine mit der Werkzeugmaschine verbundene Steuereinrichtung zur Steuerung der ersten, zweiten und/oder dritten Antriebsmittel, wobei wenigstens eine kinematischen Kenngröße der ersten und/oder dritten Maschinenachsen in Abhängigkeit einer Position des Werkzeughaltekopfes bezüglich der zweiten Maschinenachse bestimmt und eingestellt wird.

Die Erfindung bietet den Vorteil, dass immer dann, wenn der Werkzeughaltekopf nicht maximal zu einer Seite des Querträgers hin ausgelenkt ist, eine höhere maximal zulässige Geschwindigkeit und/oder eine höhere maximal zulässige Beschleunigung und/oder ein höherer maximal zulässiger Ruck bei den beiden parallelen ersten und/oder den beiden parallelen dritten Maschinenachsen vorgegeben bzw. eingestellt werden kann, als dies bei bisherigen Werkzeugmaschinen, insbesondere Portalmaschinen der Fall ist, ohne dadurch die Achsantriebe der Maschinenachsen zu überlasten. Die Maschine ist durch die genannten, variablen Maximalwerte an eine unsymmetrische Lastverteilung anpassbar. Dadurch verkürzt sich die mittels einer derartigen Werkzeugmaschine benötigte Arbeitszeit zur Bearbeitung eines Werkstücks im Vergleich zu einer herkömmlichen Werkzeugmaschine.

Bei der erfindungsgemäßen Werkzeugmaschine ist ein Werkzeug zur Bearbeitung eines Werkstücks in wenigstens zwei, üblicherweise drei, linearen Achsrichtungen relativ zu dem Werkstück verstellbar. Dabei kann bei einer Maschine mit drei (oder mehr) linearen Achsen wenigstens eine Achse auch dadurch realisiert sein, dass eine Werkstückhalterung, insbesondere ein Werkstücktisch, an der bzw. dem das Werkstück befestigt ist, in dieser Achsrichtung gegenüber der Maschinenbasis verstellbar ist.

Die Erfindung kommt typischerweise bei Portalmaschinen zur Anwendung, ist aber nicht auf diesen Maschinentyp beschränkt. Portalmaschinen sind gewöhnlich so aufgebaut und aufgestellt, dass sich die beiden auf einer horizontalen Grundplatte bzw. Maschinenbasis befestigten Tragelemente (Ständer) in Relation zu einem kartesischen Maschinenkoordinatensystem in der vertikalen Z-Richtung erstrecken und entlang der horizontalen X-Richtung verstellbar sind. Ein an den Ständern befestigter Querträger erstreckt sich in horizontaler Y-Richtung und ist durch verstellbare Befestigungen an den Ständern in Z-Richtung verstellbar. Von der Erfindung sind jedoch auch Werkzeugmaschinen umfasst, die von dieser bei Portalmaschinen üblichen Aufstellungsart und Ausrichtung der Maschinenachsen abweichen.

Insbesondere dann, wenn die Y-Achse exakt in der Mitte zwischen der Z1- und der Z2- Achse steht, müssen die Achsen Z1 und Z2 bei einer üblichen Portalmaschine jeweils nur die Hälfte der Last des Querträgers tragen. So können beide Achsen mit dem maximal für die jeweilige Achse zulässigen Strom beaufschlagt und damit maximal beschleunigt werden.

Bei einer Ausgestaltung der Erfindung ist die Abhängigkeit der kinematischen Kenngröße von der Position des Werkzeughaltekopfes einstellbar. Dies ermöglicht insbesondere eine schnelle und einfache Anpassung der kinematischen Kenngröße an unterschiedliche Lasten, insbesondere an die Masse des jeweils verwendeten Werkzeughaltekopfes und gegebenenfalls daran befestigte Anbauteile wie Werkzeughalter und/oder Werkzeuge. Entsprechende Einstellungen und Anpassungen können vorzugsweise direkt an der Steuereinrichtung an der Maschine vorgenommen werden.

Die Abhängigkeit der kinematischen Kenngröße von der Position des Werkzeughaltekopfes kann z.B. in Stufen erfolgen, beispielsweise indem die Y-Achse in mehrere Zonen unterteilt wird. Vorzugsweise wird die Abhängigkeit jedoch anhand einer kontinuierlich und stetig verlaufenden Kennlinie vorgegeben. Die Vorgabe erfolgt stets so, dass das vorgegebene, positionsabhängige Maximum der kinematischen Kenngröße erreicht werden kann, ohne den für die jeweilige Achse vorgegebenen maximal zulässigen Strom (die maximale Stromstärke) zu überschreiten.

Bei der im Zusammenhang mit der Erfindung maßgeblichen kinematischen Kenngröße handelt es sich insbesondere um die für die jeweilige Achse maximal zulässigen Werte (Maximalwerte bzw. Maxima) bezüglich Beschleunigung oder Ruck. Es kann sich jedoch auch um eine maximale Geschwindigkeit handeln. So kann bei unsymmetrischer Lastverteilung eine kleinere Maximal-Geschwindigkeit zulässig sein als bei einer symmetrischen Lastverteilung, z.B. um einen vorgegebenen maximalen Bremsweg des Querträgers der Maschine einhalten zu können.

Bei der Anpassung der kinematischen Kenngröße an eine bezüglich der vertikal ausgerichteten Ständer unsymmetrische Lastverteilung ist bezüglich der Z-Achsen vor allem die Gewichtskraft des Werkzeughaltekopfes maßgeblich. Die Trägheit hat hier- zumindest im Bereich relativ niedriger, maximal möglicher Beschleunigungen der Achsen - einen untergeordneten Einfluss. Anders hingegen bei den X-Achsen, bezüglich derer die Gewichtskraft des Werkzeughaltekopfes keinen Einfluss hat, ist dessen Trägheit maßgeblich für die positionsabhängige Vorgabe bzw. Einstellung der maximalen Beschleunigung.

Für eine beschleunigte Bewegung einer Masse gilt der physikalische Zusammenhang F = m*a. Bei einer vorgegebenen Maximal-Kraft, nämlich der Kraft, die der Antrieb der betreffenden Achse maximal aufbringen kann, hängt die erreichbare Beschleunigung damit indirekt proportional von der beschleunigten Masse ab. Dabei spielt im Zusammenhang mit der Erfindung die Masse des Querträgers an sich, also ohne daran befestigte Anbauteile wie den Werkzeughaltekopf, in der Regel keine Rolle, da der Querträger zumeist symmetrisch aufgebaut ist und sich die Kräfte daher gleichmäßig auf die Antriebe verteilen. Anders verhält es sich bei dem Werkzeughaltekopf, der sich entlang des Querträgers bzw. der Y-Achse zwischen den beiden Ständern hin und her bewegen kann. So muss bei minimaler bzw. maximaler Auslenkung der Y-Achse die Kraft zur Beschleunigung der Masse des Werkzeughaltekopfes und ggf. daran befestigter Anbauteile zumindest nahezu vollständig von jeweils einem der parallelen Antriebe aufgebracht werden. Da jedoch aufgrund des starren Portals einer Portalmaschine die parallelen Achsen jeweils nur gleich (synchron) verfahren bzw. beschleunigt werden können, resultiert daraus die maximal mögliche Beschleunigung für den Querträger insgesamt. Bei einer vorgegebenen Maximalkraft der baugleichen parallelen Antriebe ist die maximal mögliche Beschleunigung des Querträgers (inklusive Werkzeughaltekopf) dann am größten, wenn sich der Werkzeughaltekopf mittig zwischen den Ständern befindet und die zu beschleunigenden Massen gleichmäßig auf die Antriebe verteilt sind.

Die Erfindung wirkt sich daher umso stärker aus, je höher der Anteile der Masse des Werkzeughaltekopfes an der Gesamt-Masse des Querträgers (inklusive Werkzeughaltekopf) ist.

Eine Ausführungsform der Erfindung sieht vor, dass die im Zusammenhang mit der Erfindung verwendete Steuereinrichtung dazu eingerichtet ist, das Gewicht und/oder die Masse wenigstens des Werkzeughaltekopfes zu erfassen und die kinematische Kenngröße automatisch in Abhängigkeit der Position und des erfassten Gewichts und/oder der erfassten Masse des Werkzeughaltekopfes einzustellen.

Beispielsweise können das Gewicht und/oder die Masse des Werkzeughaltekopfes manuell in die Steuerung eingegeben werden. Es ist aber auch möglich, dass lediglich eine Kennung des Werkzeughaltekopfes, z.B. eine Teilenummer, in die Steuerung eingegeben oder an die Steuerung übermittelt wird und die Steuerung automatisch das Gewicht und/oder die Masse aus einer für die Kennung maßgeblichen Datenbank entnimmt.

Vorteilhaft werden zur Ermittlung und Einstellung der kinematischen Kenngröße nicht nur das Gewicht und/oder die Masse des Werkzeughaltekopfes berücksichtigt, sondern auch das Gewicht und/oder die Masse wenigstens eines damit verbindbaren Anbauteils, wie eines Werkzeughalters, einer Werkzeugverlängerung oder eines Werkzeugs.

Eine noch komfortablere Ausführungsform der Erfindung sieht vor, dass das Gewicht und/oder die Masse (Trägheit) des Werkzeughaltekopfes automatisch mittels Testfahrten mittels der Steuereinrichtung ermittelt und in der Steuereinrichtung hinterlegt wird. Insbesondere bei minimal oder maximal ausgelenkter Y-Achse können beispielsweise bei Fahrten mit konstanter Geschwindigkeit bzw. konstanter Beschleunigung aus einem Vergleich der Motorströme der parallel verfahrbaren Achsen aufgrund dem Fachmann bekannter Zusammenhänge das Gewicht bzw. die Masse des Werkzeughaltekopfes und ggf. daran befestigter Anbauteile bestimmt werden. Die Steuereinrichtung verfügt hierfür über die erforderlichen Mess- und Rechenmittel sowie eine geeignete Software.

Durch die automatisch Bestimmung und positionsabhängige Anpassung der Maxima von Geschwindigkeit, Beschleunigung und/oder Ruck erfolgt die Anpassung mit minimalem Zusatzaufwand für den Benutzer der Maschine.

Die Erfindung ist insbesondere relevant für "übliche" Portalmaschinen, bei denen die erste (X) und dritte Raumrichtung bzw. Achsrichtung (Z) horizontal ausgerichtet sind und die zweite Raumrichtung bzw. Achsrichtung (Y) vertikal ausgerichtet ist. Dabei sind die erste (X), zweite (Y) und dritte Raumrichtung (Z) senkrecht zueinander ausgerichtet und bilden ein kartesisches Koordinatensystem.

Es sind jedoch auch Werkzeugmaschinen bekannt, die von dieser bei Portalmaschinen üblichen Ausrichtung abweichen und bei denen sich z.B. die Tragelemente in horizontaler (X-) Richtung erstrecken.

Vorzugsweise handelt es sich bei der erfindungsgemäßen Portalmaschine um eine Portalfräsmaschine, mit der eine Fräsbearbeitung eines Werkstücks möglich ist.

Selbstverständlich kann die erfindungsgemäße Werkzeugmaschine auch mehr als die bisher genannten Maschinenachsen aufweisen, insbesondere eine oder zwei Rundachsen, z.B. an einem Werkstücktisch oder dem Werkzeughaltekopf, so dass beispielsweise auch eine 5-Achs-Bearbeitung des Werkstücks möglich ist.

Die Erfindung wird nachfolgend anhand von Ausführungsbeispielen exemplarisch näher beschrieben und erläutert. Dabei zeigen:
- FIG 1: Ein Portalmaschinensystem mit einer Portalmaschine und einer CNC-Steuerung,
- FIG 2: Verfahrensschritte bei der Durchführung eines erfindungsgemäßen Verfahrens.

FIG 1 zeigt ein Werkzeugmaschinensystem in Form eines Portalmaschinensystems 1, umfassend eine Werkzeugmaschine in Form einer Portalmaschine 2, z.B. eine Portalschleifmaschine, und eine mit der Portalmaschine 2 verbundene Steuereinrichtung, z.B. eine numerische bzw. CNC-Steuerung 3 zur Steuerung der Portalmaschine 2. Ferner umfasst das Portalmaschinensystem 1 noch ein über ein Netzwerk 4 mit der CNC-Steuerung 3 verbundene externe Recheneinrichtung, insbesondere in Form eines CAD/CAM-Systems 15.

Die dargestellte Portalmaschine 2 umfasst ein horizontal ausgerichtetes Maschinengestell 6, auch Maschinenbasis (Basis) oder Grundplatte genannte, an dem bzw. der seitlich die beiden Ständer 7 und 8 angeordnet und in vertikaler (Z-) Richtung ausgerichtet sind. Der Ständer 7 ist über eine verstellbare X1-Achse und der Ständer 8 über eine verstellbare X2-Achse verstellbar mit dem Maschinengestell 6 verbunden. Die Verstellung (Verfahrbewegung) der X1- und X2-Achse erfolgt synchron, gesteuert durch die CNC-Steuerung 3. Die beiden Ständer 7 und 8 sind über einen Querträger 9 miteinander verbunden, der zusammen mit den beiden Ständern 7 und 8 ein Portal bildet. Der Querträger 9 ist mittels verstellbarer Maschinenachsen Z1 und Z2 in Z-Richtung verfahrbar, wobei analog zu den Achsen X1 und X2 konstruktionsbedingt auch die Maschinenachsen Z1 und Z2 stets synchron verfahren werden müssen. Der Querträger 9 umfasst eine verstellbare Y-Achse zum Verfahren eines an dem Querträger 9 befestigten Werkzeughaltekopfes 10 in der Y-Richtung. Auch die Verfahrbewegungen der Z1, Z2 und Y-Achse werden durch die CNC-Steuerung 3 gesteuert. Die genannten Achsen verfügen jeweils über geeignete, an sich bekannte Antriebsmittel (Achsantriebe) (nicht dargestellt), die insbesondere jeweils einen Motor, einen oder mehrere Umrichter und ein Getriebe, z.B. einen Kugelgewindetrieb umfassen.

Zur Bearbeitung eines Werkstücks (nicht dargestellt) sind an dem Werkzeughaltekopf 10 ein Werkzeughalter 11 und ein Werkzeug, im Ausführungsbeispiel eine Schleifscheibe 12 befestigt. Die Verfahrbewegungen des Werkzeugs 12 relativ zu dem Werkstück (nicht dargestellt) werden gewöhnlich bezüglich eines kartesischen Maschinenkoordinatensystems MKS mit den ersichtlichen Koordinaten-Achsen +X, +Y und +Z programmiert. Im Ausführungsbeispiel stimmen die Koordinaten-Achsrichtungen vorteilhaft mit den Maschinenachsrichtungen überein.

Für die Maschinenachsen X1, X2, Z1 und Z2 sind in der CNC-Steuerung 3 kinematische Kenngrößen der betreffenden Achsen in Form von Maximalwerten (Maxima) für die Geschwindigkeit und/oder die Beschleunigung und/oder den Ruck hinterlegt. Diese Maximalwerte sind so gewählt, dass sie bei der größtmöglichen zulässigen Belastung der Achsen nicht zu einer Überlastung der jeweiligen Achsantriebe führen. Die CNC-Steuerung 3 ermittelt die Achsbewegungen vorzugsweise derart, dass die genannten Maximalwerte erreicht, jedoch nicht überschritten werden. Damit werden jedoch häufig die Möglichkeiten der Maschine nicht voll ausgeschöpft und nicht die kürzest mögliche Bearbeitungszeit bei der Bearbeitung eines Werkstücks erreicht.

Die Erfindung sieht daher vor, dass die einstellbaren Maxima für die Geschwindigkeit und/oder die Beschleunigung und/oder den Ruck in Abhängigkeit von der Position des Werkzeughaltekopfes 10 entlang der Y-Achse bestimmt werden. Die größten Maximalwerte können jeweils dann zugelassen werden, wenn sich der Werkzeughaltekopf 10 in der Mitte zwischen den beiden Ständern 7 und 8 befindet, da dann die durch das Gewicht und/oder die Masse (Trägheit) verursachten Kräfte bei einer Bewegung der X- oder der Z-Achsen gleichmäßig auf die jeweiligen Achsen übertragen werden. Gegenüber herkömmlichen Portalmaschinen sind daher größere Werte einstellbar, ohne die jeweiligen Achsen zu überlasten.

Vorteilhaft sind in der CNC-Steuerung 3 für wenigstens ein Achsen-Paar (X1, X2; Z1, Z2) für die positionsabhängigen Maximalwerte Kennlinien für Geschwindigkeit und/oder die Beschleunigung und/oder den Ruck hinterlegt, die die CNC-Steuerung 3 bei der Regelung der betreffenden Achsen (X1, X2; Z1, Z2) berücksichtigt, so dass die Regelung jeweils in Abhängigkeit der Position der Y-Achse erfolgt, um bei Bedarf minimale Bearbeitungszeiten für das betreffende Werkstück zu erreichen.

Vorteilhaft ermittelt die CN-Steuerung 3 selbsttätig mittels einer geeigneten Software die von der Position bezüglich der Y-Achse und dem Gewicht bzw. der Masse des Werkzeughaltekopfes 10, gegebenenfalls mit damit verbundenen Anbauteilen wie Werkzeughalter und Werkzeug, abhängigen, maximal zulässigen Werte für die Geschwindigkeit und/oder die Beschleunigung und/oder den Ruck. Hierzu können in der CNC-Steuerung 3 das entsprechende Gewicht bzw. die Masse und die Länge der Y-Achse hinterlegt werden.

Um kürzest mögliche Bearbeitungszeiten zu erreichen, werden die ermittelten, positionsabhängigen Maxima für die Geschwindigkeit und/oder die Beschleunigung und/oder den Ruck bei der Bearbeitung des Werkstücks eingestellt und vorzugsweise dynamisch an die aktuelle Position des Werkzeughaltekopfes 10 angepasst.

Mittels der CNC-Steuerung 3 ist es möglich, das Gewicht und/oder die Masse (Trägheit) des Werkzeughaltekopfes automatisch mittels Testfahrten zu ermitteln und in der CNC-Steuerung 3 zu hinterlegen. Hierzu werden bei minimal oder maximal ausgelenkter Y-Achse Fahrten mit konstanter Geschwindigkeit bzw. konstanter Beschleunigung durchgeführt. Aus einem Vergleich der Motorströme der parallel verfahrbaren Achsen (X1, X2 bzw. Z1, Z2) wird das Gewicht bzw. die Masse des Werkzeughaltekopfes und ggf. daran befestigter Anbauteile bestimmt. Die CNC-Steuerung 3 verfügt hierfür über die erforderlichen Mess- und Rechenmittel sowie eine geeignete Software.

Anders als bei dem gezeigten Portalmaschinensystem 1 ist es auch möglich, dass die beiden Ständer 7 und 8 fest an der Maschinenbasis 6 befestigt sind und der Querträger 9 lediglich mittels der Maschinenachsen Z1 und Z2 verstellbar ist. Die Verstellung in X-Richtung erfolgt dann mittels eines in dieser Richtung verstellbaren Werkstücktisches (nicht dargestellt).

Darüber hinaus ist es ebenfalls möglich, dass die Ständer 7 und 8 - wie in FIG 1 gezeigt - zwar in der X-Richtung verstellbar sind, jedoch der Querträger 9 fest an den beiden Ständern 7 und 8 befestigt ist. Die Verstellung des Werkzeugs relativ zu dem Werkstück in Z-Richtung erfolgt dann mittels eines in dieser Richtung verstellbaren Werkstücktisches (nicht dargestellt).

Auch die beiden zuletzt genannten Ausführungsformen sind von der Erfindung umfasst.

Eine Ausführungsform der Erfindung sieht vor, dass das Werkzeugmaschinensystem 1 und insbesondere dessen Funktion bzw. Arbeitsweise anhand eines digitalen Zwillings des Werkzeugmaschinensystem 1 simulierbar ist. Die Simulation kann beispielsweise mittels der entsprechend ausgebildeten, externen Recheneinrichtung 15 erfolgen. Mittels des digitalen Zwillings ist insbesondere eine Simulation einer Bearbeitung eines Werkstücks durchführbar, bei der die kinematische Kenngröße von der Position des Werkzeughaltekopfes 10 bezüglich der zweiten Achse Y1 abhängig ist. So kann beispielsweise der durch die Erfindung erreichbare Zeitvorteil bereits vor der realen Bearbeitung eines Werkstücks bestimmt werden.

Ferner ist es möglich, die von der Position des Werkzeughaltekopfes 10 abhängige kinematische Kenngröße der betreffenden Achsen anhand des digitalen Zwillings mittels einer Simulation von Bewegungsvorgängen und der dadurch zu erwartenden Kräfte und Motorströme zu ermitteln und ggf. auf die reale numerische Steuerung zu übertragen.

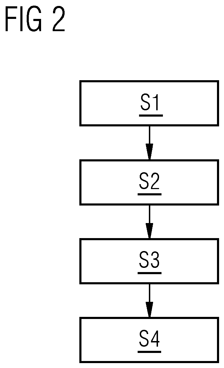

FIG 2 veranschaulicht Verfahrensschritte bei der Durchführung eines erfindungsgemäßen Verfahrens.

In einem ersten Verfahrensschritt S1 werden eine Werkzeugmaschine 2 mit einer Y-Achse Y1, zwei parallelen X-Achsen X1 und X2 und/oder zwei parallelen Z-Achsen Z1 und Z2 und eine mit der Werkzeugmaschine 2 verbundene Steuereinrichtung 3 bereitgestellt.

In einem zweiten Verfahrensschritt werden in der Steuereinrichtung kinematische Kenngrößen in Form zulässiger Maximalwerte für Geschwindigkeit und/oder Beschleunigung und/oder Ruck für die Achsen (das Achsen-Paar) X1 und X2 und/oder für die Achsen (das Achsen-Paar) Z1 und Z2, jeweils in Abhängigkeit von der Position der Y-Achse, bereitgestellt oder automatisch von der Steuereinrichtung 3 ermittelt.

In einem dritten Verfahrensschritt wird die ermittelte kinematische Kenngröße der ersten (X1, X2) und/oder dritten Achsen (Z1, Z2) in Abhängigkeit einer Position des Werkzeughaltekopfes (10) bezüglich der zweiten Achse (Y1) eingestellt.

In einem vierten Verfahrensschritt erfolgt eine Bearbeitung eines Werkstücks unter Berücksichtigung der eingestellten kinematischen Kenngröße.

## Patentansprüche

1. Werkzeugmaschinensystem (1) mit einer Werkzeugmaschine (2), umfassend:
- eine ortsfeste Maschinenbasis (6);
- zwei parallel in einer dritten Raumrichtung (Z) ausgerichtete, mit der Maschinenbasis (6) verbundene Tragelemente (7, 8);
- ein mit den beiden parallelen Tragelementen (7, 8) verbundener, in einer zweiten Raumrichtung (Y) ausgerichteter Querträger (9);
- ein an dem Querträger (9) befestigter, mittels zweiter Antriebsmittel entlang einer zweiten Maschinenachse (Y1) in der zweiten Raumrichtung (Y) entlang des Querträgers (9) verstellbarer Werkzeughaltekopf (10);
- wobei der Querträger (9) mittels dritter Antriebsmittel entlang zweier paralleler dritter Maschinenachsen (Z1, Z2) in der dritten Raumrichtung (Z) bezüglich der Tragelemente (7, 8) verstellbar ist und/oder
- die beiden Tragelemente (7, 8) mittels erster Antriebsmittel entlang zweier paralleler erster Maschinenachsen (X1, X2) in einer ersten Raumrichtung (X) bezüglich der Maschinenbasis (6) verstellbar sind;
und eine mit der Werkzeugmaschine (2) verbundene Steuereinrichtung (3) zur Steuerung der ersten, zweiten und/oder dritten Antriebsmittel,
**dadurch gekennzeichnet, dass**
wenigstens eine kinematischen Kenngröße der ersten (X1, X2) und/oder dritten Maschinenachsen (Z1, Z2) in Abhängigkeit einer Position des Werkzeughaltekopfes (10) bezüglich der zweiten Maschinenachse (Y1) vorgebbar ist.

2. Werkzeugmaschinensystem (1) nach Anspruch 1, wobei als kinematische Kenngröße die maximale Geschwindigkeit und/oder die maximale Beschleunigung und/oder der maximale Ruck der jeweiligen Maschinenachse (X1, X2; Z1, Z2) in Abhängigkeit von der Position des Werkzeughaltekopfes (10) einstellbar ist.

3. Werkzeugmaschinensystem (1) nach Anspruch 1 oder 2, wobei die Abhängigkeit der kinematischen Kenngröße von der Position des Werkzeughaltekopfes (10) anhand einer Kennlinie einstellbar ist.

4. Werkzeugmaschinensystem (1) nach einem der vorherigen Ansprüche, wobei das Gewicht und/oder die Masse des Werkzeughaltekopfes (10) anhand wenigstens einer Testfahrt automatisch ermittelbar ist.

5. Werkzeugmaschinensystem (1) nach einem der vorherigen Ansprüche, wobei die erste (X) und zweite Raumrichtung (Y) horizontal ausgerichtet sind und die dritte Raumrichtung (Z) vertikal ausgerichtet ist.

6. Werkzeugmaschinensystem (1) nach einem der vorherigen Ansprüche, wobei die erste (X), zweite (Y) und dritte Raumrichtung (Z) senkrecht zueinander ausgerichtet sind und ein kartesisches Koordinatensystem bilden.

7. Werkzeugmaschinensystem (1) nach einem der vorherigen Ansprüche, wobei es sich bei der Werkzeugmaschine (2) um eine Portalmaschine (2), insbesondere eine Portalfräsmaschine oder eine Portalschleifmaschine, handelt.

8. Verfahren zum Betrieb eines Werkzeugmaschinensystems (1) mit einer Werkzeugmaschine (2), umfassend:
- eine ortsfeste Maschinenbasis (6);
- zwei parallel in einer dritten Raumrichtung (Z) ausgerichtete, mit der Maschinenbasis (6) verbundene Tragelemente (7, 8),
- ein mit den beiden parallelen Tragelementen (7, 8) verbundener, in einer zweiten Raumrichtung (Y) ausgerichteter Querträger (9);
- ein an dem Querträger (9) befestigter, mittels zweiter Antriebsmittel entlang einer zweiten Maschinenachse (Y1) in der zweiten Raumrichtung (Y) entlang des Querträgers (9) verstellbarer Werkzeughaltekopf (10);
- wobei der Querträger (9) mittels dritter Antriebsmittel entlang zweier paralleler dritter Maschinenachsen (Z1, Z2) in der dritten Raumrichtung (Z) bezüglich der Tragelemente (7, 8) verstellbar ist und/oder
- die beiden Tragelemente (7, 8) mittels erster Antriebsmittel entlang zweier paralleler erster Maschinenachsen (X1, X2) in einer ersten Raumrichtung (X) bezüglich der Maschinenbasis (6) verstellbar sind;
und eine mit der Werkzeugmaschine (2) verbundene Steuereinrichtung (3) zur Steuerung der ersten, zweiten und/oder dritten Antriebsmittel,
**dadurch gekennzeichnet, dass**
wenigstens eine kinematischen Kenngröße der ersten (X1, X2) und/oder dritten Maschinenachsen (Z1, Z2) in Abhängigkeit einer Position des Werkzeughaltekopfes (10) bezüglich der zweiten Maschinenachse (Y1) bestimmt und eingestellt wird.

9. Verfahren zum Betrieb eines Werkzeugmaschinensystems (1) nach Anspruch 8, wobei als kinematische Kenngröße die maximale Geschwindigkeit und/oder die maximale Beschleunigung und/oder der maximale Ruck der jeweiligen Achse (X1, X2; Z1, Z2) in Abhängigkeit von der Position des Werkzeughaltekopfes (10) eingestellt wird.

10. Verfahren zum Betrieb eines Werkzeugmaschinensystems (1) nach Anspruch 8 oder 9, wobei die Abhängigkeit der kinematischen Kenngröße von der Position des Werkzeughaltekopfes (10) anhand einer Kennlinie eingestellt wird.

11. Verfahren zum Betrieb eines Werkzeugmaschinensystems (1) nach einem der Ansprüche 8 bis 10, wobei das Gewicht und/oder die Masse des Werkzeughaltekopfes (10) anhand wenigstens einer Testfahrt automatisch ermittelt werden.

12. Steuereinrichtung (3), insbesondere numerische Steuerung (3), für ein Werkzeugmaschinensystem (1) nach einem der Ansprüche 1 bis 7 zur Durchführung eines Verfahrens nach einem der Ansprüche 8 bis 11.

13. Steuereinrichtung (3) nach Anspruch 12, die dazu eingerichtet ist, das Gewicht und/oder die Masse des Werkzeughaltekopfes (10) zu erfassen und die kinematische Kenngröße automatisch in Abhängigkeit der Position und des erfassten Gewichts und/oder der erfassten Masse des Werkzeughaltekopfes (10) einzustellen.

14. Digitaler Zwilling eines Werkzeugmaschinensystems (1) nach einem der Ansprüche 1 bis 7 zur Simulation eines Verfahrens nach einem der Ansprüche 8 bis 11, wobei mittels des digitalen Zwillings eine Simulation einer Bearbeitung eines Werkstücks durchführbar ist, bei der die kinematische Kenngröße von der Position des Werkzeughaltekopfes (10) bezüglich der zweiten Maschinenachse (Y1) abhängig ist.
